# EUROPÄISCHE PATENTSCHRIFT

(11) **EP 3 708 516 B1**
(45) Veröffentlichungstag und Bekanntmachung des Hinweises auf die Patenterteilung: **23.11.2022**
(21) Anmeldenummer: 20173707.9
(22) Anmeldetag: 13.07.2015
(51) Int. Cl.: B65D 77/02, B65D 85/10

(54) **ZIGARETTENPACKUNG**
CIGARETTE PACKAGE
PAQUET DE CIGARETTES

(30) Priorität: 06.08.2014 DE 102014011396
(43) Veröffentlichungstag der Anmeldung: 16.09.2020
(62) Teilanmeldung aus: 17001656.2
(73) Patentinhaber: Focke & Co. (GmbH & Co. KG), 27283 Verden (DE)
(72) Erfinder: Buse, Henry, 27374 Visselhövede (DE); Schönberger, Hans, 27283 Verden (DE); Schlenker, Michael, 27337 Blender (DE)
(74) Vertreter: Ellberg, Nils

(56) Entgegenhaltungen:
- EP-A1- 2 141 090
- WO-A1-2010/001334
- WO-A1-2013/084642
- WO-A1-2013/120916
- DE-A1-102009 034 705

## Beschreibung

Die Erfindung betrifft Packungen, insbesondere für Zigarettengruppen, mit den Merkmalen des Oberbegriffs des Anspruchs 1.

Zigarettenpackungen mit einer Innenumhüllung aus insbesondere feuchtigkeits- und aromadichter Folie sind in unterschiedlicher Ausführung bekannt, wobei Zigarettengruppe und Innenumhüllung einen (Dicht-)Block bilden.

Der Zigarettenblock bzw. Dichtblock kann mit einer besonderen mehrfach benutzbaren Öffnungshilfe versehen sein, insbesondere in der Ausführung mit einem klebenden Verschlussetikett für eine Öffnung, die nach Entnahme von Packungsinhalt durch den Verbraucher wieder in die Schließstellung gebracht werden kann.

Das Verschlussetikett kann von Hand betätigt werden, insbesondere mittels Grifflasche.

Bekannt sind Zigarettenpackungen, bei denen das Verschlussetikett der Innenpackung mit einem Endstück dauerhaft an der Innenseite des Deckels einer Klappdeckelpackung als Außenpackung befestigt ist, sodass beim Betätigen des Deckels das Verschlussetikett in Öffnungs- oder Schließstellung bewegt wird (EP 2 155 568 B1). Weitere Packungen sind aus DE102009034705 A1 und EP2141090 A1 bekannt.

Die Erfindung befasst sich mit Verbesserungen an Packungen der vorstehenden oder ähnlicher Ausführung. Einerseits geht es um Maßnahmen für die zuverlässige Herstellung einer (klebenden) Verbindung des Verschlussetiketts mit dem Deckel der (Außen-)Packung. Andererseits geht es um die Gestaltung der Packung zur Erleichterung einer präzisen, zuverlässigen Anbringung des Verschlussmittels bzw. Verschlussetiketts an der blockförmigen Innenpackung, sowie um ein optimales Erscheinungsbild der Packung.

Zur Lösung der vorstehenden Aufgabe ist die erfindungsgemäße Packung mit den Merkmalen des Anspruchs 1 ausgebildet.

Die Packung ist so ausgebildet, dass die Verbindung zwischen Verschlussetikett einerseits und Außenpackung bzw. Deckel andererseits aufgrund der Ausbildung der Innenpackung und/oder der Außenpackung selbsttätig, also ohne manuelle Einwirkung, zustande kommt. Um eine präzise Anbringung bzw. Positionierung von Öffnungs- bzw. Schlussetiketten auch bei großflächiger Ausführung zu gewährleisten, ist bei einer Klappschachtel mit Kragen als Außenpackung der Kragen in besonderer Weise gestaltet, gegebenenfalls in Verbindung mit einer abgestimmten Gestaltung eines Deckel-Innenlappens der Außenpackung.

Eine im Bereich einer Kragen-Vorderwand übliche Ausnehmung ist so ausgebildet, dass sie sich über die volle Breite der Kragen-Vorderwand erstreckt und vorzugsweise - der Höhe nach - bis zu einer frontseitigen, oberen Kante einer Schachtel-Vorderwand (Schließkante für den Deckel) erstreckt. Die Ausnehmung ist seitlich durch Kragen-Seitenlappen begrenzt. Die Vorderseite der Innenpackung, nämlich die Innen-Vorderwand, liegt dadurch über die volle Breite frei, so dass die Anbringung und auch die Handhabung des Verschlussetiketts, insbesondere der Herstellung einer Verbindung mit der Innenseite des Deckels der Außenpackung, erleichtert sind.

Weitere Einzelheiten und Merkmale der Innovation ergeben sich aus der Beschreibung der in den Patentzeichnungen dargestellten Ausführungsbeispiele. Die Ausführungsbeispiele der Figuren 1-10 sowie 16-20 sind nicht Teil der Erfindung.

Es zeigt:
- *Fig. 1: eine Innenpackung bzw. einen Dichtblock mit Verschlussetikett in perspektivischer Darstellung,
- Fig. 2: eine komplette (Zigaretten-)Packung in der Ausführung als Klappschachtel mit geöffnetem Deckel, ebenfalls in perspektivischer Darstellung,
- Fig. 3: einen Vertikalschnitt eines oberen Bereichs der Packung gemäß Fig. 2, bei vergrößertem Maßstab,
- Fig. 4: eine Darstellung analog Fig. 3 bei geschlossenem Deckel der Außenpackung,
- Fig. 5: eine andere Ausführung einer Innen- bzw. Dichtpackung in perspektivischer Darstellung,
- Fig. 6: eine (Zigaretten-)Packung analog zu Fig. 2 mit einem Dichtblock der Fig. 5,
- Fig. 7: einen vertikalen Teilschnitt VII-VII der Fig. 6 in vergrößertem Maßstab,
- Fig. 8: eine dritte Ausführung einer Innen- bzw. Dichtpackung in perspektivischer Darstellung,
- Fig. 9: eine Zigarettenpackung in einer Darstellung analog Fig. 2, Fig. 6 mit einer Innenpackung gemäß Fig. 8,
- Fig. 10: einen vertikalen Teilschnitt X-X der Fig. 9 in vergrößertem Maßstab,
- Fig. 11: eine weitere Ausführung einer Packung mit offenem Deckel in perspektivischer Darstellung,
- Fig. 12: eine Darstellung einer Packung analog Fig. 11 für eine Ausführung mit Schrägkanten (Oktagonal-Packung),
- Fig. 13: eine Darstellung entsprechend Fig. 12 für eine Außenpackung mit Rundkanten,
- Fig. 14: einen ausgebreiteten Zuschnitt für einen Kragen der Außenpackung,
- Fig. 15: eine Innenpackung, insbesondere ein Dichtblock in Vorderansicht,
- Fig. 16: eine (Zigaretten-)Packung in der Ausführung mit Klappschachtel und Teilansicht auf Innenpackung mit Kragen,
- Fig. 17: einen Vertikalschnitt durch einen oberen Teilbereich der Packung gemäß Fig. 16, Schnittebene XVII-XVII, in vergrößertem Maßstab,
- Fig. 18: die Packung gemäß Fig. 17 in frontseitiger Ansicht mit Vertikalschnitt im Deckelbereich entsprechend Sicht- und Schnittebene XVIII-XVIII,
- Fig. 19: einen Teilbereich eines ausgebreiteten Zuschnitts für eine (Außen-)Packung gemäß Fig. 16 bis Fig. 18,
- Fig. 20: einen Ausschnitt XX in Fig. 18 bei vergrößertem Maßstab.

Die dargestellten Zigarettenpackungen betreffen ein besonderes Zusammenspiel zwischen einer Außenpackung 10, insbesondere in der Ausführung einer Klappschachtel bzw. Hinge Lid Packung und einer Innenpackung 11. Diese besteht aus einem Folienzuschnitt, insbesondere in der Ausführung als (thermisch siegelbare) mehrlagige Dichtfolie. Die Innenpackung 11 bzw. der Folienzuschnitt umgibt eine Zigarettengruppe 12 unter Bildung von Innen-Vorderwand 13, Innen-Rückwand 14, Innen-Seitenwänden 15 und Innen-Stirnwand 16. Eine ebenfalls vorhandene Innen-Bodenwand ist nicht gezeigt.

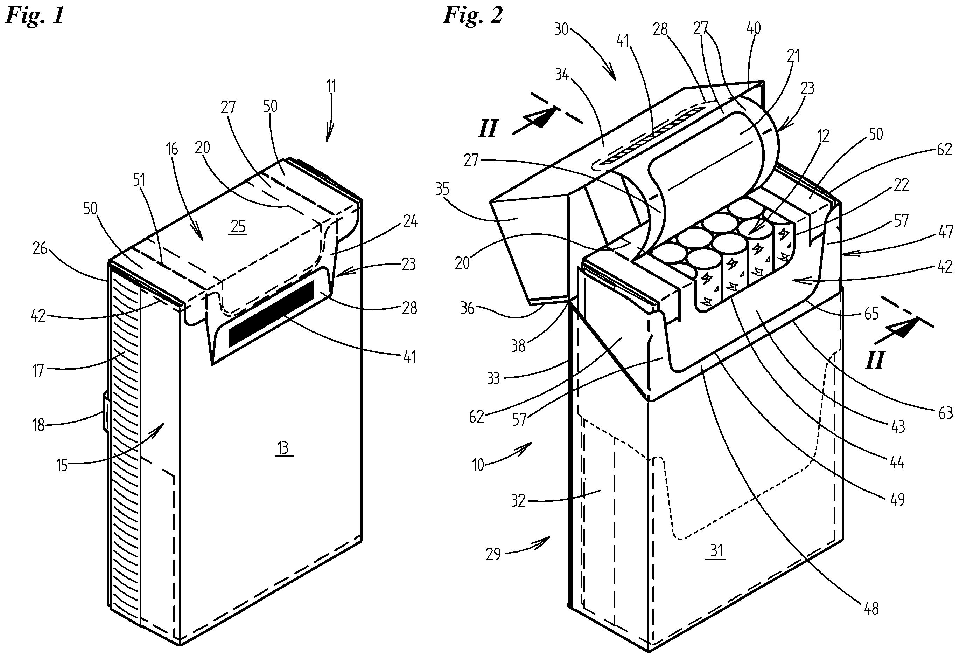

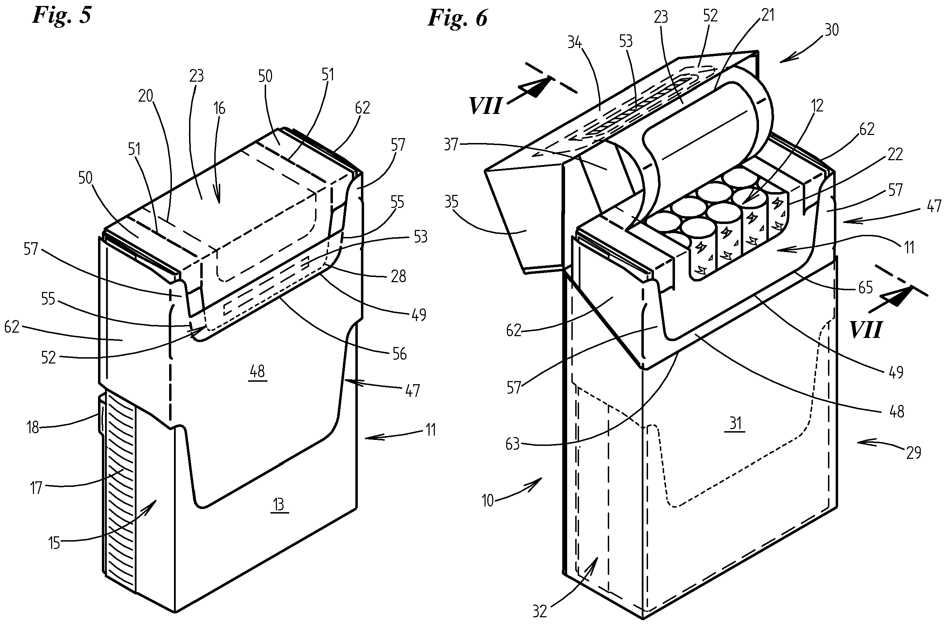

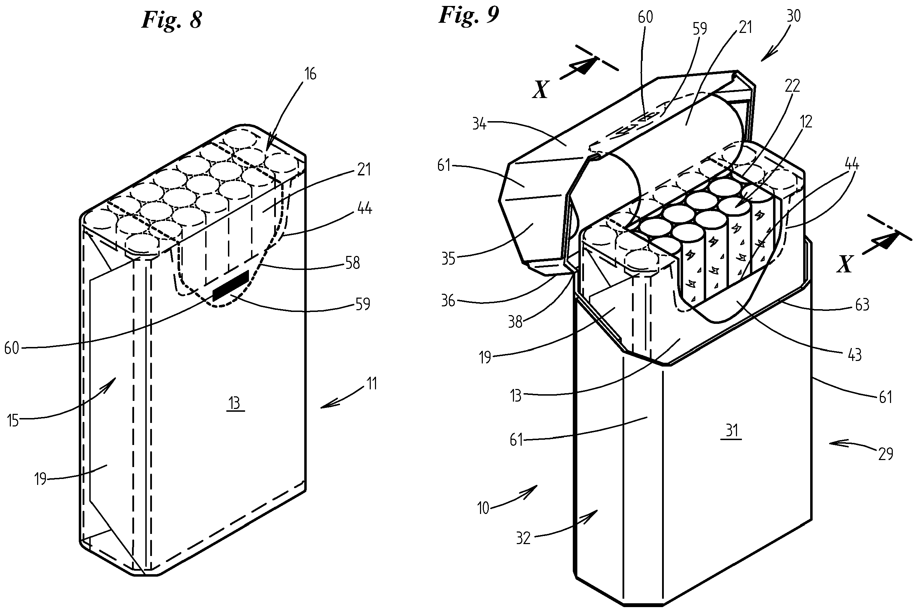

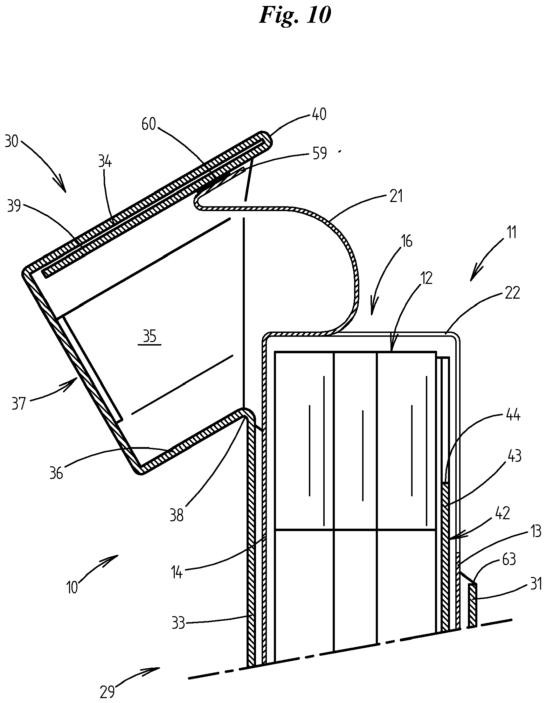

Die die Zigarettengruppe 12 allseitig umgebende Innenpackung 11 weist durch thermisches Siegeln hergestellte Verbindungs- bzw. Verschlussnähte auf. Bei dem Ausführungsbeispiel gemäß Fig. 1 bzw. gemäß Fig. 5 sind Seitennähte 17 im Bereich der Innen-Seitenwände 15 gebildet, und zwar in der Ausführung als Flossennaht. Weiterhin ist eine Quernaht 18 im Bereich der Innen-Rückwand 14 gebildet, ebenfalls in der Ausführung als Flossennaht. Die Quernaht 18 erstreckt sich etwa in halber Höhe der Innen-Rückwand 14. Bei der Packung gemäß Fig. 8 bis Fig. 10 ist die Innenpackung 11 mit einer bei Stanniol- bzw. Weichpackungen bekannten und üblichen Faltung im Bereich der Innen-Seitenwände 15 versehen, nämlich mit einer Kuvertfaltung 19 unter Bildung trapezförmiger Faltlappen. Diese sind ebenfalls durch thermisches Siegeln (oder durch Klebung) miteinander verbunden. Eine entsprechende Faltung befindet sich im Bereich der Innen-Bodenwand (nicht gezeigt).

Die Innenpackung 11 ist mit einer grundsätzlich bekannten Öffnungshilfe versehen. Eine Schwächungslinie, insbesondere eine Perforationslinie 20, bildet bzw. begrenzt eine Öffnungslasche 21, die sich quer über die Innen-Stirnwand 16 und in einem oberen Bereich der Innen-Vorderwand 13 erstreckt. Die Öffnungslasche 21 gibt in Öffnungsstellung eine Entnahmeöffnung 22 der Innenpackung 11 für die Entnahme von Zigaretten frei.

Das Handhabungsmittel für die mehrfach benutzbare Öffnungshilfe besteht aus einem Verschlussetikett 23. Dieses ist als Folienzuschnitt mit vorzugsweise vollflächiger Verklebung in einem oberen, stirnseitigen Bereich der Innenpackung 11 angeordnet, vorliegend mit einem Frontschenkel 24 im Bereich der Innen-Vorderwand 13, einem Stirnabschnitt 25 im Bereich der Innen-Stirnwand 16 und einem Verankerungsschenkel 26 an der Innen-Rückwand 14. Das Verschlussetikett 23 überdeckt die Öffnungslasche 21 und ist vorzugsweise vollflächig mit dieser verklebt. Ein Randstreifen 27 des Verschlussetiketts 23 ist mit Bereichen der Innenpackung 11 neben dem Verschlussetikett 23 (lösbar) verklebt. Zum Öffnen der Innenpackung 11 wird das Verschlussetikett 23 an einem Endbereich des Frontschenkels 24 - Betätigungslasche 28 - erfasst und unter Mitnahme des Verschlussetiketts 23 in die Öffnungsstellung bewegt (Fig. 2, Fig. 6).

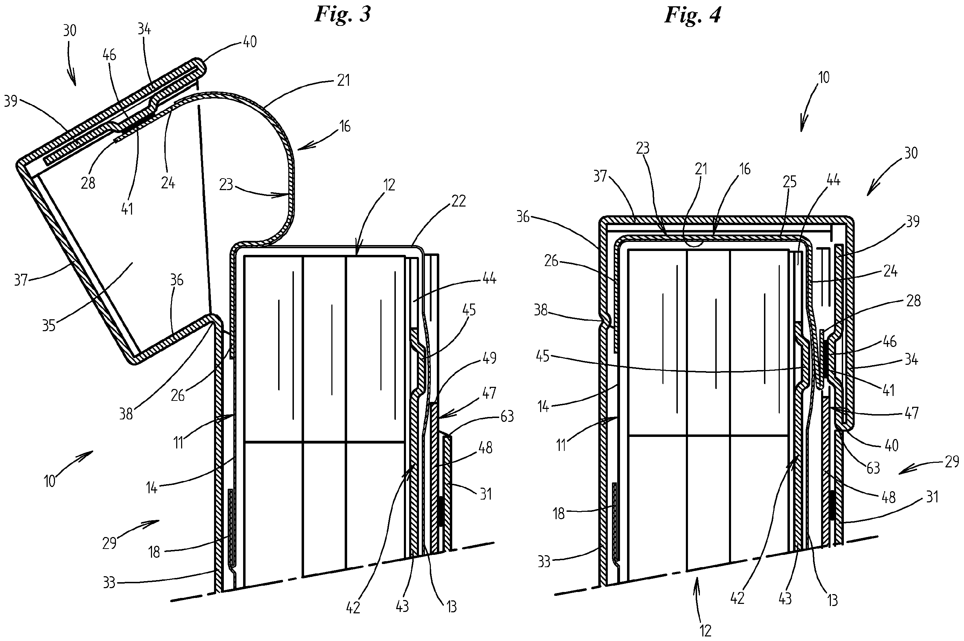

Die Betätigung des Verschlussetiketts 23 ist gemäß Fig. 1 bis Fig. 10 mit dem Öffnungs- und Schließvorgang der Außenpackung 10 gekoppelt. Diese besteht in der Ausführung als Klappschachtel aus einem Schachtelteil 29 und einem Deckel 30. Der Schachtelteil 29 weist eine Schachtel-Vorderwand 31, Schachtel-Seitenwände 32 und eine Schachtel-Rückwand 33 auf. In analoger Weise ist der Deckel 30 ausgebildet mit Deckel-Vorderwand 34, Deckel-Seitenwänden 35 und Deckel-Rückwand 36. Der obere Abschluss ist eine Deckel-Stirnwand 37. Die Deckel-Rückwand 36 ist mit der Schachtel-Rückwand 33 über ein quergerichtetes Liniengelenk 38 schwenkbar verbunden. Die Deckel-Vorderwand 34 ist bei den gezeigten Beispielen doppelwandig ausgebildet, nämlich mit einem Deckel-Innenlappen 39 versehen, der unter Bildung einer Deckelkante 40 gegen die Innenseite der Deckel-Vorderwand 34 gefaltet und mit dieser (durch Klebung) verbunden ist.

Das Verschlussetikett 23 ist mit dem Deckel 30 derart verbunden, dass beim Öffnen desselben das Verschlussetikett 23 - unter Mitnahme der Öffnungslasche 21 - ebenfalls in die Öffnungsstellung gezogen wird. Zu diesem Zweck ist das Verschlussetikett 23 mit der Innenseite der Deckel-Vorderwand 34 (dauerhaft und mit ausreichender Haltbarkeit) verbunden, insbesondere mit der Innenseite des Deckel-Innenlappens 39. Die Betätigungslasche 28 ist vorzugsweise mit punkt- bzw. streifenförmigen Leimfeldern versehen, die eine haltbare Verbindung zwischen Verschlussetikett 23 und Deckel 30 bewirken.

Es sind Maßnahmen vorgesehen, die insbesondere bei der Herstellung der Packung bzw. bei der Positionierung der Deckel-Vorderwand 34 in der packungsgemäßen Schließstellung einen örtlichen Anpressdruck erzeugen zur Herstellung der (Leim-)Verbindung zwischen Verschlussetikett 23 bzw. Betätigungslasche 28 und Deckel-Vorderwand 34, vorzugsweise mit dem Deckel-Innenlappen 39.

Bei dem Ausführungsbeispiel gemäß Fig. 1 bis Fig. 5 sind zusammenwirkende Packungsteile mit Vorsprüngen, Verdickungen, Erhöhungen oder dergleichen versehen, die örtlich einen erhöhten Druck bei geschlossenem Deckel 30 erzeugen, um die (Klebe-)Verbindung zu bewirken. Bei dem Ausführungsbeispiel ist die Innenpackung 11 mit einem Innenkragen 42 versehen. Dieser besteht vorzugsweise aus (dünnem) Karton und ist beispielsweise trayartig ausgebildet mit einer Tray-Vorderwand 43, Seitenlappen bzw. Seitenwänden, Bodenwand und ggf. Rückwand. Der Einfachheit halber ist in den Zeichnungen nur die Tray-Vorderwand 43 - innerhalb der Dichtpackung 11 - gezeigt. Die Vorderwand 43 erstreckt sich vorzugsweise über die volle Höhe der Innenpackung 11. Des Weiteren ist in einem oberen Bereich eine Ausnehmung 44 gebildet entsprechend der üblichen Ausnehmung eines standardmäßigen Kragens einer Klappschachtel.

Eine erste, nach außen gerichtete Erhöhung bzw. ein lokaler Vorsprung 45 ist am Innenkragen 42 angebracht, und zwar im Bereich der Tray-Vorderwand 43. Der als wulstartige Prägung ausgebildete Vorsprung 45 befindet sich in einem oberen Bereich der Vorderwand 43, unmittelbar unterhalb der Ausnehmung 44, und zwar in Höhe der Verbindung der Betätigungslasche 28 mit dem Deckel 30 bzw. mit dem Deckel-Innenlappen 39. Die Betätigungslasche 28 ist bei diesem Ausführungsbeispiel umgefaltet, so dass eine Innenseite des Verschlussetiketts 23 nach außen gerichtet ist. Das Leimfeld 41 befindet sich demnach aufgrund der Faltung der Betätigungslasche 28 an der Außenseite und wird beim Schließen des Deckels 30 bzw. beim Falten der Deckel-Vorderwand 34 an den Deckelinnenlappen 39 gedrückt.

Die Außenpackung 10 ist vorzugsweise mit einem Gegendruckteil versehen. Die Deckel-Vorderwand 34 weist an der Innenseite einen Gegenvorsprung 46 auf. Dieser befindet sich vorzugsweise in Höhe des Vorsprungs 45 und erhöht den auf die Verbindungsstelle des Verschlussetiketts 23 wirkenden (beidseitigen) Anpressdruck. Die Betätigungslasche 28 wird mittels Leimfeld 41 im Bereich des Gegenvorsprungs 46 mit der Deckel-Vorderwand 34 verbunden. Eine weitere Besonderheit besteht darin, dass der vorzugsweise durch Prägen hergestellte Gegenvorsprung 46 im Bereich des Deckelinnenlappens 39 gebildet ist, so dass eine nach innen versetzte Verbindungsstelle für die Betätigungslasche 28 mit der Deckelvorderwand 34 geschaffen ist.

Die Außenpackung 10 ist als (standardmäßige) Klappschachtel ausgebildet, und zwar mit einem üblichen Kragen 47 mit einer Kragen-Vorderwand 48 und Kragen-Seitenlappen 62. Die Kragen-Vorderwand 48 weist eine bei diesem Packungstyp übliche stirnseitige Ausnehmung 49 auf, die den Zugang zum Packungsinhalt erleichtert. Die Befestigung der Betätigungslasche 28 liegt vorzugsweise im Bereich dieser Ausnehmung 49, ebenso die Vorsprünge 45, 46.

Das Verschlussetikett 23 ist vorzugsweise so ausgebildet, dass seitlich streifenförmige Erweiterungen gebildet sind, nämlich Haltestreifen 50. Diese erstrecken sich im Bereich der Innen-Stirnwand 16, vorzugsweise derart, dass die gesamte Fläche der Innen-Stirnwand 16 durch das Verschlussetikett 23 abgedeckt ist. Kurze Schenkel verlaufen in die Innen-Vorderwand 13 und - nicht dargestellt - bis in die Innen-Rückwand 14. Die Haltestreifen 50 sind durch Schwächungslinien bzw. Perforationslinien 51 von einem mittleren Hauptteil des Verschlussetiketts 23 abgegrenzt und werden beim erstmaligen Öffnen von diesem abgetrennt, bleiben also in dauerhafter, klebender Verbindung mit der Innenpackung 11 (Fig. 2).

Die Packung gemäß Fig. 5 bis Fig. 7 ist hinsichtlich der Außenpackung 10 und der Innenpackung 11 in weitgehender Übereinstimmung mit dem voranstehend beschriebenen Ausführungsbeispiel ausgebildet. Hinsichtlich der Verbindung des Verschlussetiketts 23 bzw. der Betätigungslasche 28 mit dem Deckel 30 der Außenpackung 10 wird der Kragen 47 der Außenpackung 10 herangezogen. Im Bereich der vorzugsweise konventionell gestalteten Ausnehmung 49 der Kragen-Vorderwand 48 befindet sich ein Verbindungsstück 52 zum Fixieren der Betätigungslasche 48 (an der Innenseite) und zur Verbindung derselben mit dem Deckel 30 bzw. der Innenseite der Deckel-Vorderwand 34.

Das Verbindungsstück 52 kann als gesondertes Teilstück mittels Leimfeld 41 bzw. Leimstreifen 53 mit dem Verschlussetikett 23, insbesondere mit der Betätigungslasche 28, verbunden sein. Diese ist bei dem vorliegenden Beispiel nicht gefaltet, sondern liegt mit der (im Übrigen leimfreien) Außenseite an dem Verbindungsstück 52 an bzw. ist mit diesem verbunden. Das Verbindungsstück 52 ist vorzugsweise bei der Herstellung der Packung, insbesondere bei der abschließenden Faltung der Deckel-Vorderwand 32, mit dieser ebenfalls über Leim, vorliegend über zwei Leimstreifen 54, verbunden. Auch hier erfolgt die Verbindung mit der Innenseite des Deckel-Innenlappens 39. Das Verbindungsstück 52 wirkt dabei als Distanzausgleich zwischen Deckel 30 bzw. Deckelinnenlappen 39 einerseits und Betätigungslasche 28 des Verschlussetiketts 23 andererseits.

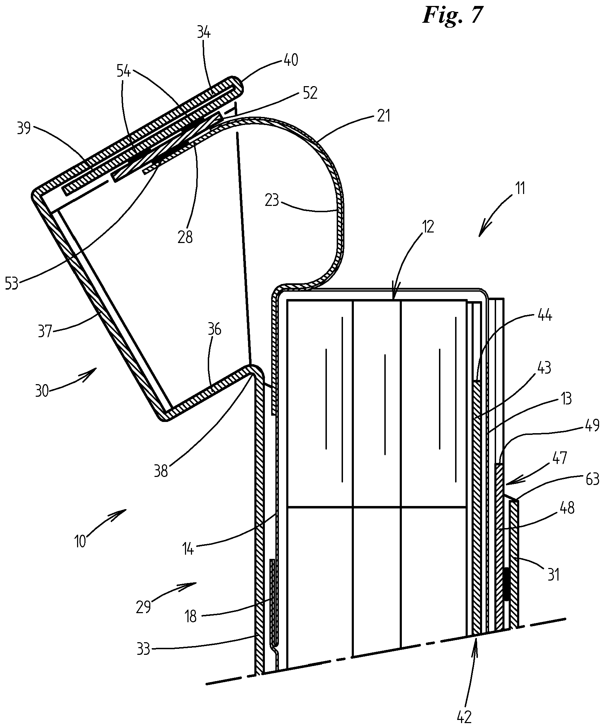

Das Verbindungsstück 52 ist vorzugsweise (ursprünglich) mit dem Zuschnitt des Kragens 47 verbunden, und zwar mit der Kragen-Vorderwand 48 im Bereich der Ausnehmung 49. Das Verbindungsstück 52 ist als Streifen ausgebildet, der an die Kontur der Ausnehmung 49 angepasst ist. Die Verbindung mit dem Kragen 47 ist so ausgebildet, dass eine leichte Abtrennung möglich ist, nämlich beim erstmaligen Öffnen des Deckels 30. Das Verbindungsstück 52 ist über durch Stanzungen begrenzte Restverbindungen 55 mit dem Kragen 47 verbunden. Vorliegend ist eine durchgehende Stanzlinie 56 im Bereich einer quer gerichteten Kante der Ausnehmung 49 entsprechend der Kontur derselben angeordnet. Lediglich im Bereich aufrechter Schenkel, nämlich im Bereich von Stegen 57 des Kragens 47, befinden sich die Restverbindungen 55, die die Einheit des Verbindungsstücks 52 mit dem Kragen 47 bis zur Fertigstellung der Packung gewährleisten, andererseits aber beim Öffnen des Deckels 30 die in üblicher Weise ausgebildete Ausnehmung 49 freigeben. Das Verbindungsstück 52 bleibt dauerhaft in Verbindung mit der Innenseite der Deckel-Vorderwand 34 (Fig. 7).

Eine besondere (Zigaretten-)Packung mit selbsttätiger Öffnung einer (dichten) Innenpackung 11 ist in Fig. 8 bis Fig. 10 gezeigt. Die Außenpackung 10 ist eine vereinfachte Version einer Klappschachtel bzw. Hinge Lid Packung, und zwar fehlt der sonst übliche Kragen. Die Innenpackung 11 ist vorzugsweise mit einem Innenkragen 42 versehen.

Die Innenpackung 11 weist eine Öffnungslasche 21 auf, die durch eine Schwächungslinie 58 begrenzt ist. Diese ist vorzugsweise so ausgebildet, dass bei einer mehrlagigen Folie der Innenpackung 11 nur einzelne Lagen mit Stanzlinien bzw. Perforationen versehen sind, jedoch mindestens eine Lage bzw. Schicht der Folie unversehrt bleibt, so dass die Innenpackung 11 im Ursprungszustand auch im Bereich der Öffnungslasche 21 dicht ist.

Zum Öffnen der Innenpackung 11 wird die Öffnungslasche 21 unmittelbar erfasst und in die Öffnungsstellung gezogen. Die Öffnungslasche 21 ist vorzugsweise so ausgebildet, nämlich konturiert, dass ein unteres Ende im Bereich der Innen-Vorderwand 13 leicht erfasst werden kann. Der Endbereich der Öffnungslasche 21 ist hier als Zunge 59 geformt. Die Abmessungen der Öffnungslasche 21 sind zweckmäßigerweise so gewählt, dass die Zunge 59 bzw. ein unterer Teil derselben im Bereich der Tray-Vorderwand 43 des Innenkragens 42 liegt, und zwar unterhalb der Ausnehmung 44 der Vorderwand 43.

Die Öffnungslasche 21 der Innenpackung 11 ist mit dem Deckel 30 verbunden, nämlich mit der Deckel-Vorderwand 34. Diese ist vorzugsweise konventionell mit einem Deckelinnenlappen 39 versehen. An diesem ist die Öffnungslasche 21 befestigt, vorliegend mit einem Leimstreifen 60. Dieser ist an der Außenseite der Innenpackung 11 im Bereich der Öffnungslasche 21 angebracht, und zwar im Bereich der Zunge 59, vorzugsweise unterhalb einer quer gerichteten Kante der Ausnehmung 44 des Innen-Trays 42.

Bei der Fertigung der Packung 10, nämlich beim Positionieren des Deckels 30 mit der Deckel-Vorderwand 34 in der Schließstellung, befindet sich der Deckelinnenlappen 39 in unmittelbarer Nachbarschaft der Innenpackung 11, nämlich der Zunge 59 der Öffnungslasche 21. Durch den Anlagedruck beim Faltvorgang wird die Verbindung mit dem an der Außenseite aufgebrachten Leimstreifen 60 hergestellt. Beim (erstmaligen) Öffnen des Deckels 30 wird die Öffnungslasche 21 aus der Verbindung mit dem Zuschnitt der Innenpackung 11 herausgetrennt. Die Innenpackung 11 wird so geöffnet (Fig. 9). Die Entnahme der Zigaretten ist aufgrund der Entnahmeöffnung 22 und der Ausnehmung 44 des Innenkragens 42 erleichtert.

Bei dieser Ausführung fehlt eine Abdeckung der Innen-Seitenwände 15 der Innenpackung 11 im Bereich oberhalb bzw. außerhalb des Schachtelteils 29. Vorteilhafterweise sind deshalb im Bereich dieser Innen-Seitenwände 15 Kuvertfaltungen 19 der Innenpackung 11 gebildet, die bei geöffnetem Deckel das Bild einer üblichen Innenumhüllung aus beispielsweise Stanniol vermitteln. Die Faltlappen der Kuvertfaltung 19 sind vorzugsweise durch thermisches Siegeln miteinander verbunden.

Weiterhin besteht eine Besonderheit darin, dass die Außenpackung 10 dieser Packungsausführung mit abgeschrägten aufrechten Packungskanten, also Schrägkanten 61 versehen ist, und zwar durchgehend im Bereich von Schachtelteil 29 und Deckel 30. Die Packung ist somit als Achteck- bzw. Oktagonalpackung ausgebildet. Auch der Innenkragen 42 ist an diese Kontur der Außenpackung 10 angepasst.

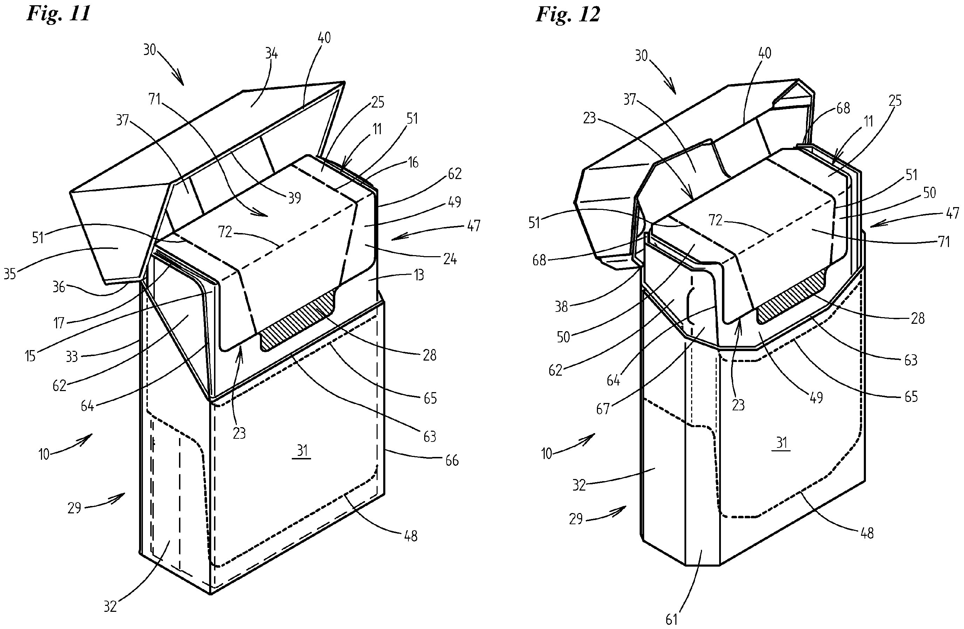

Eine Besonderheit der Packungen gemäß Fig. 11 bis Fig. 13 besteht darin, dass Maßnahmen für eine erleichterte, präzise Anbringung des Verschlussetiketts 23 und für eine erleichterte Handhabung durch den Verbraucher verwirklicht sind. Das Verschlussetikett 23 kann in beliebiger Weise ausgebildet sein, auch als streifenförmiger Zuschnitt. Bei den gezeigten Packungsbeispielen sind besonders gestaltete Verschlussetiketten 23 eingesetzt.

Eine besondere Ausbildung bezieht sich auf die Gestaltung des Kragens 47 der als Klappschachtel ausgebildeten Außenpackung 10. Die von der Kragen-Vorderwand 48 und den Kragen-Seitenlappen 42 begrenzte Ausnehmung 49 ist vergrößert bzw. erweitert, insbesondere derart, dass sie sich (etwa) über die volle Breite der Packungsvorderseite, also über die volle Breite der Kragen-Vorderwand 48 erstreckt. Dadurch liegt der obere, stirnseitige Bereich der Innenpackung 11 frei, insbesondere bis zu einer oberen Begrenzungskante bzw. quergerichteten Schließkante 63 des Schachtelteils 29, nämlich der Schachtel-Vorderwand 31. Es steht dadurch ein großflächiger Bereich für die Anbringung, aber auch für die Handhabung des Verschlussetiketts 23 zur Verfügung.

Bei dem Ausführungsbeispiel der Fig. 11 wird durch entsprechende Ausnehmung 49 der Kragen-Vorderwand 48 die volle freie Fläche der Innenpackung 11 bzw. der Innen-Vorderwand 13 oberhalb der Schachtel-Vorderwand 31 freigehalten. Bei geöffnetem Deckel 30 sind lediglich die Kragen-Seitenlappen 62 im Bereich der Deckel-Seitenwände 35 sichtbar. Diese sind in besonderer Weise ausgebildet, nämlich einer schräg liegenden, gegenüber der quaderförmigen Innenpackung 11 leicht zurückgesetzten Lappenkante 64. Die Kragen-Seitenlappen 62 sind demnach im oberen Bereich mit einem konvergierenden Querprofil ausgebildet und mit einer Rundung im Übergang zur horizontalen Oberkante. Die Stabilität der Packung auch hinsichtlich der Schließstellung des Deckels 30 wird vorzugsweise ein entsprechend ausgebildetes Stützorgan innerhalb der Innenpackung gewährleistet, insbesondere durch einen Innenkragen.

Der Kragen 47 ist bei diesem Ausführungsbeispiel mit einer unteren Begrenzung der Ausnehmung 49 versehen, die als quergerichtete, vorzugsweise gradlinige Kragenkante 65 in Höhe der Schließkante 63 oder - wie gezeigt - unterhalb derselben verläuft. Die Kragen-Vorderwand 48 erstreckt sich nahezu bis in den Bereich einer Bodenwand der Außenpackung, passend zu Größe und Kontur der Ausnehmung 49. Die Außenpackung ist vorliegend exakt quaderförmig ausgebildet, also im Querschnitt rechtwinkligen aufrechten Packungskanten 66.

Fig. 12 betrifft ein Ausführungsbeispiel, dass vorteilhafterweise bei einer Klappschachtel als Außenpackung 10 mit Schrägkanten 61 - analog zu Fig. 9 - ausgebildet ist. Der Kragen 47 ist an diese Packungskontur angepasst, wobei die Kragen-Seitenlappen 62 im Bereich der frontseitigen Schrägkanten 61 Schrägschenkel 67 aufweisen, die gegenüber den Kragen-Seitenlappen 62 unter einem stumpfen Winkel gerichtet sind, entsprechend der Form der Schrägkanten 61. Die Ausnehmung 49 ist demnach bei dieser Ausführung durch die Schrägschenkel 67 begrenzt bzw. durch deren Lappenkante 64, die vorzugsweise schräg gerichtet ist, mit zur Deckel-Stirnwand 37 konvergierender Breite. Vorzugsweise ist bei dieser Packungsform auch ein rückseitiger Lappenschenkel 68 im Bereich rückseitiger Schrägkanten 61 an den Kragen-Seitenlappen 62 angeordnet.

Die Kragenkante 65 liegt auch bei diesem Ausführungsbeispiel vorzugsweise unterhalb der Schließkante 63. Beide Kanten 63 und 65 sind - vorzugsweise parallel verlaufend - poligonartig ausgebildet mit jeweils unter einem stumpfen Winkel zueinander gerichteten Katenabschnitten, zu den Seitenwänden 32 aufwärts gerichtet.

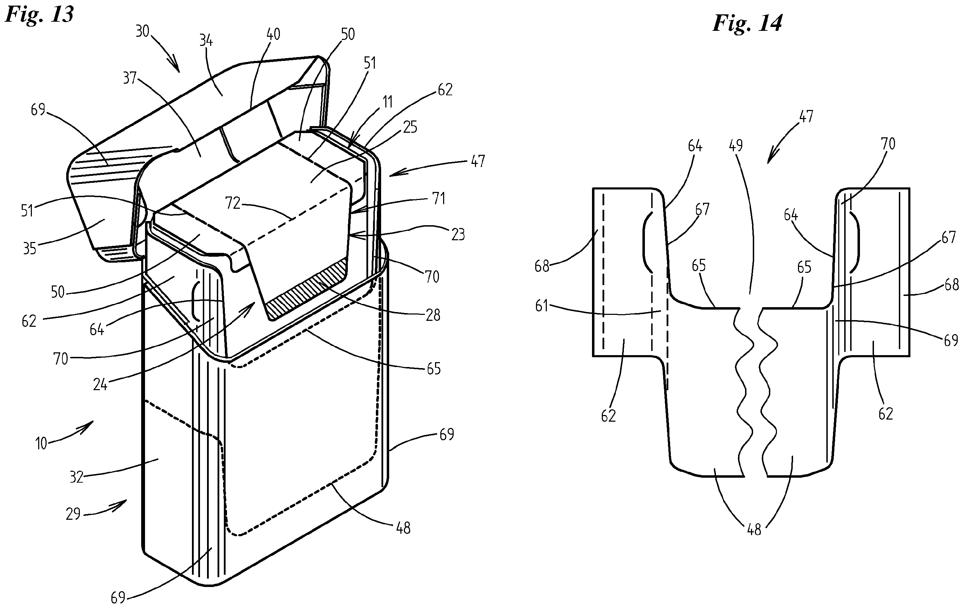

Fig. 13 zeigt eine zu Fig. 12 analog ausgebildete Packung, bei der die aufrechten Packungskanten als Rundkanten 69 ausgebildet sind, und zwar unter Abstimmung auf die Abmessung von Zigaretten. Die Rundkanten 69 erstrecken sich auch im Bereich des Deckels 30, vorzugsweise frontseitig und rückseitig.

Der Kragen 47 ist an diese Packungsgestaltung angepasst. Die Ausnehmung 49 ist seitlich durch Rundschenkel 70 begrenzt, die die Innenpackung 11 in diesem Bereich umfassen. Die beidseitigen Rundschenkel 70 sind durch Lappenkanten 64 begrenzt, die vorzugsweise analog zu Fig. 12 schräg gerichtet sind unter Bildung einer zur Stirnseite divergierenden Breite der Ausnehmung 49. Eine quergerichtete Kragenkante 64 zur Begrenzung der Ausnehmung 49 erstreckt sich vorzugsweise mit geringem Abstand unterhalb der ebenfalls quer gerichteten Schließkante 63 des Schachtelteils 29. Beide Kanten 63, 65 sind vorzugsweise gradlinig und parallel zueinander angeordnet.

Fig. 14 zeigt einen ausgebreiteten Zuschnitt für einen Kragen 47, und zwar in der linken Hälfte in der Ausführung für eine Klappschachtel mit Schrägkanten 61 und in der rechten Hälfte in der Ausführung für Klappschachteln mit Rundkanten 69.

Die bei diesen Packungen eingesetzten Verschlussetiketten 23 können in beliebiger Weise, auch als streifenförmige Zuschnitte, ausgebildet sein, vorzugsweise unter Bildung von Frontschenkel 24, Stirnabschnitt 25 und Rückseitigem Verankerungsschenkel 26.

Eine Besonderheit sind die Verschlussetiketten 23 gemäß Fig. 11 und Fig. 12. Die Verschlussetiketten 23 erstrecken sich (etwa) über die volle Breite der Innenpackung 11, wobei vorzugsweise die Innenstirnwand 16 vollflächig gedeckt ist und ebenso ein oberer, zur Innen-Stirnwand 16 benachbarter Bereich der Innen-Vorderwand 13. Bei dem Beispiel gemäß Fig. 5 ist der Stirnabschnitt 25 end- bzw. randseitig durch Schrägschnitte an die Kontur der Außenpackung (10) (Oktagonalpackung), angepasst. Der Frontschenkel 24 ist mit geringfügig reduzierter Breite ausgebildet unter Einhaltung eines geringfügigen Abstands von den Lappenkanten 64. Im Bereich eines hinteren Querrandes befindet sich die (klebstofffreie) Betätigungslasche (28), die hier vorzugsweise von Hand zu erfassen ist.

Die Verschlussetiketten 23 können mit voller Breite in die Öffnungs- und Schließstellung bewegt werden. Bei den vorliegend gezeigten Ausführungsbeispielen wird ein Hauptstreifen 71 des Verschlussetiketts 23 erfasst und von den seitlichen Haltestreifen 50 abgetrennt. Die Haltestreifen 50 sind bei den vorliegenden Beispielen durch die Perforationslinien 51 von den Haltestreifen 50 abtrennbar beim (erstmaligen) Öffnen des Verschlussetiketts 23. Die Perforationslinien 51 erstrecken sich vorzugsweise mindestens im Bereich der Schenkel 24 und 25 des Verschlussetiketts 23.

Bei den besonderen Verschlussetiketten 23 gemäß Fig. 11, Fig. 12 verlaufen die Perforationslinien 51 - ausgehend von der Betätigungslasche 28 - divergierend, so dass der Hauptstreifen 71 mindestens im Bereich der Innen-Stirnwand 16 eine größere Breite aufweist als die Betätigungslasche 28. Die Haltestreifen 50 erstrecken sich bei diesem Ausführungsbeispiel über die gesamte Länge des Verschlussetiketts.

Eine weitere Besonderheit besteht darin, dass quergerichtete Faltlinien 72 bei vorzugsweise allen Ausführungen des Verschlussetiketts 23 als Schwächungslinie des Etikettenmaterials (Folie) ausgebildet sind, wobei Perforationsschnitte in einem TeilQuerschnitt der Folie gebildet sind, jedenfalls unter Erhaltung einer innenliegenden Dichtlage der mehrlagigen Folie. Dadurch ist die Faltung erleichtert, ohne die Wichtigkeit des Verschlussetiketts 23 zu beeinträchtigen.

Die Innenpackung 11 ist bei diesen Ausführungsbeispielen vorzugsweise in der im Zusammenhang mit Fig. 1 bis Fig. 10 beschriebenen Weise ausgebildet, also insbesondere mit einem Innenkragen 42. Des Weiteren können die (großflächigen) Verschlussetiketten 23 in der Ausführung gemäß Fig. 11, Fig. 12 auch bei den Packungen der Fig. 1 bis Fig. 7 eingesetzt werden.

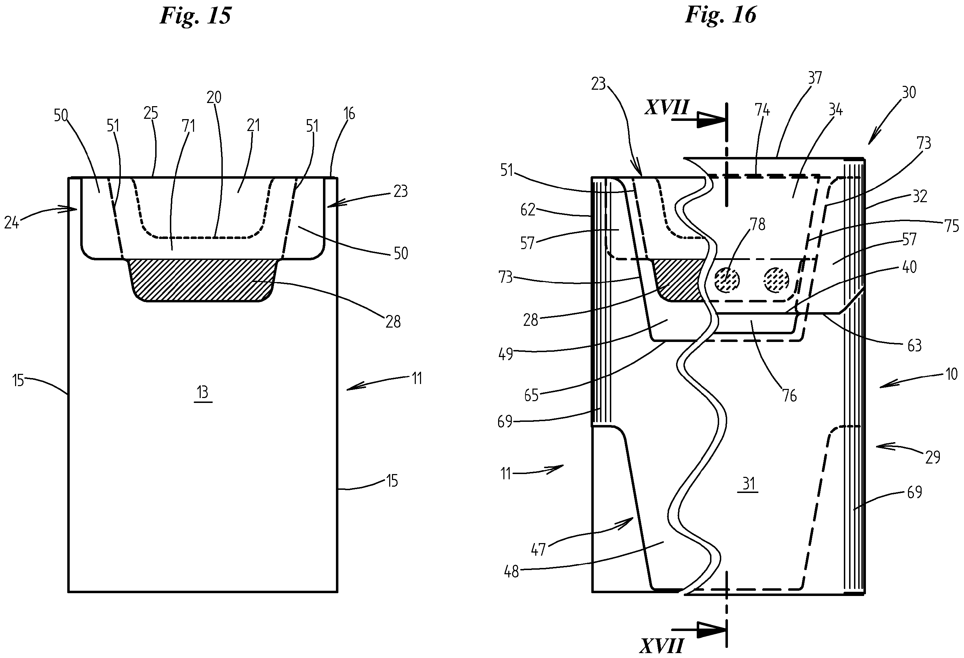

Weitere Besonderheiten hinsichtlich der Ausbildung von (Zigaretten-)Packungen mit einer Außenpackung 10 in der Ausführung als Klappschachtel/Hinge Lid Pack und einer Innenpackung 11 vorzugsweise als Dichtblock zeigen Fig. 15 bis Fig. 20.

Fig. 15 ist die Frontansicht einer Innenpackung 11 in der Ausführung als Dichtblock. Das hinsichtlich des Frontschenkels 24 sichtbare Verschlussetikett 23 entspricht hier (etwa) der Ausführung gemäß Fig. 11 und Fig. 12.

Die Besonderheit betrifft vorrangig die Ausbildung der Außenpackung 10, vorliegend beispielhaft in der Ausführung mit Rundkanten 69. Der - aus einem gesonderten Zuschnitt bestehende - Kragen 47 ist mit einer im Prinzip üblichen Ausnehmung 49 versehen, die von seitlichen Stegen 57 im Bereich der Frontseite der Packung (Kragen-Vorderwand 48) begrenzt ist. Die Ausnehmung 49 bzw. die Stege 57 sind in diesem Bereich durch schräggerichtete Stegkanten 73 begrenzt, die eine zur Stirnseite divergierende Ausnehmung 49 begrenzen. Die Ausnehmung 49 erstreckt sich vorzugsweise bis in einen Bereich unterhalb der Schließkante 63 der Schachtel-Vorderwand 31. Die quergerichtete Kragenkante 65 ist geradlinig.

Das Verschlussetikett 23 ist mindestens mit der Betätigungslasche 28 im Bereich der Ausnehmung 49 der Kragen-Vorderwand 48 angeordnet, kann demnach beispielsweise von Hand erfasst werden - bei geöffnetem Deckel 30. Weiterhin erstrecken sich die den Hauptstreifen 71 der Öffnungslasche 21 begrenzenden Perforationslinien 51 innerhalb der Ausnehmung 49, vorzugsweise parallel zu den Stegkanten 73. Bei Betätigen der Öffnungslasche 21 - und beim Heraustrennen des Hauptstreifens 71 - bleiben demnach die seitlichen Bereiche des Verschlussetiketts 23, also vorliegend die Haltestreifen 50, überwiegend im Bereich der Stege 57, sind von diesen verdeckt.

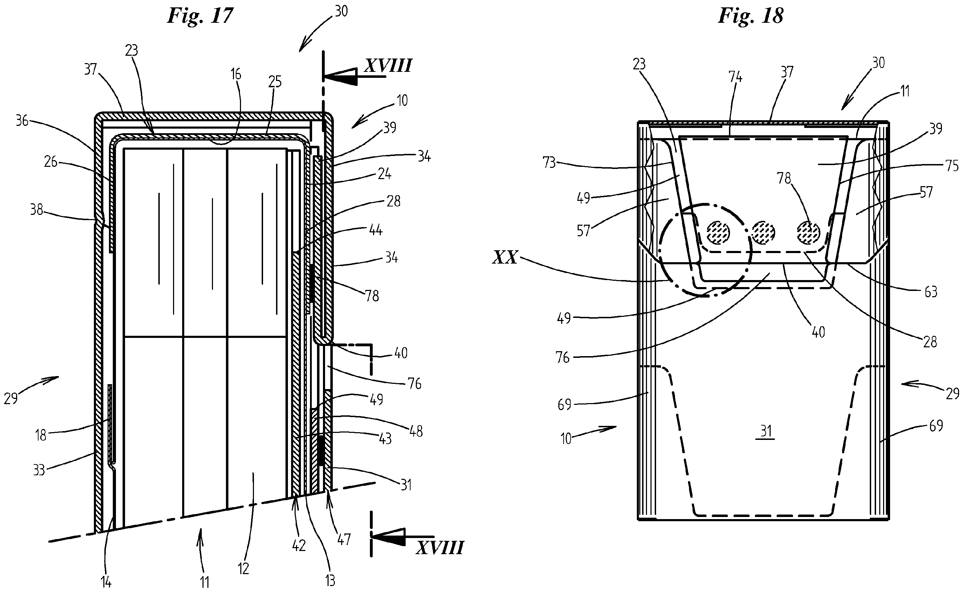

Der Deckel-Innenlappen 39 der Außenpackung 10 ist in besonderer Weise ausgebildet und angeordnet, nämlich derart, dass bei geschlossenem Deckel der Deckel-Innenlappen 39 (fast) vollständig innerhalb der Ausnehmung 49 der Kragen-Vorderwand 48 liegt, also insbesondere ohne wechselseitige Überdeckung. Dadurch wird erreicht, dass der Deckel-Innenlappen 39 bei geschlossenem Deckel 30 (etwa) mit der Kragen-Vorderwand 48 bündig liegt (insbesondere Fig. 17). Dies führt zu einer besseren Schließstellung des Deckels 30.

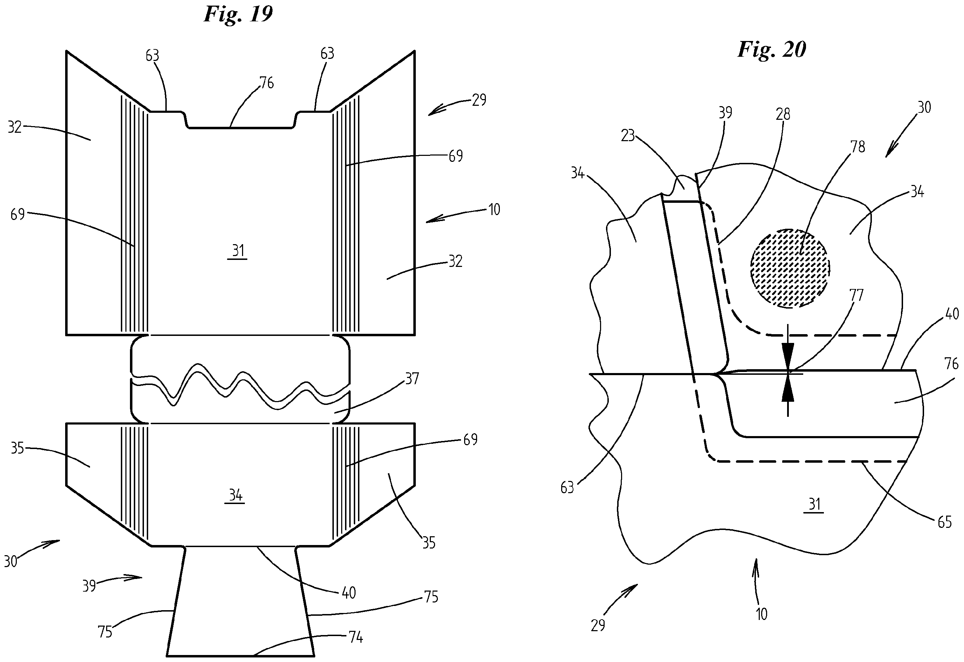

Bei Ausbildung eines Kragens 47 mit einer Ausnehmung 49, die sich - in der Breite - nur über einen Teilbereich der Kragen-Vorderwand 48 erstreckt, muss der Deckel-Innenlappen 39 mindestens hinsichtlich der Größe und Positionierung an die Ausnehmung 49 angepasst sein, vorzugsweise auch hinsichtlich der Kontur. Bei der - vorzugsweise - trapezförmigen Kontur der Ausnehmung 49 (Fig. 16, Fig. 18) ist der Deckel-Innenlappen 39 vorzugsweise ebenfalls trapezförmig ausgebildet (Fig. 19) mit einer Außenkante 74 die größer bzw. länger ist als eine Verbindungslinie des Deckel-Innenlappens 39 mit der Deckel-Vorderwand 34, also mit der durch Falten gebildeten Deckelkante 40. Die Abmessung des Deckel-Innenlappens 39 in Längsrichtung des Zuschnitts ist vorzugsweise so gewählt, dass sich der (gefaltete) Deckel-Innenlappen 39 annähernd über die volle Abmessung (Höhe) der Deckel-Vorderwand 34 erstreckt. Schräg bzw. konvergierend verlaufende Seitenkanten 75 des Deckel-Innenlappens 39 sind vorliegend parallel zu den Stegkanten 73 und mit Abstand von diesen angeordnet.

Als weitere Besonderheit ist im Bereich der Schließkante 63, vorzugsweise mittig, ein Fenster 76 gebildet. Dieses besteht aus einer Vertiefung bzw. aus einem Ausschnitt am freien Rand der Schachtel-Vorderwand 31 (Fig. 19). Das Fenster 76 ist eine Unterbrechung der Schließkante 63, also eine Unterbrechung der Anlage der Deckelkante 40 an der Schließkante 63 des Schachtelteils 29. Im Bereich des Fensters 76 ist die Innenpackung 11 bzw. die Innen-Vorderwand 13 sichtbar. Die Ausnehmung 49 der Kragen-Vorderwand 48 ist vorzugsweise so bemessen und/oder gestaltet, dass das Fenster 76 vollständig innerhalb des Bereichs der Ausnehmung 49 liegt. Die Abmessung des Fensters 76 entlang der Schließkante 63 ist so gewählt, dass die Deckelkante 40, also die Faltkante des Deckel-Innenlappens 39 mit der Deckel-Vorderwand 34, weitgehend der Abmessung des Fensters 76 in Querrichtung der Packung entspricht. Durch die als Faltkante ausgebildete Deckelkante 40 ergibt sich ein geringfügiger Versatz 77, der aufgrund des Fensters 76 unauffällig bleibt.

Bei dem vorliegenden Beispiel ist die Betätigungslasche 28 durch Klebung - Leimpunkte 78 - mit der Innenseite der Deckel-Vorderwand 34 verbunden, insbesondere mit dem Deckel-Innenlappen 39.

**Bezugszeichenliste:**

| | | | |
|---|---|---|---|
| 10 | Außenpackung | 45 | Vorsprung |
| 11 | Innenpackung | 46 | Gegenvorsprung |
| 12 | Zigarettengruppe | 47 | Kragen |
| 13 | Innen-Vorderwand | 48 | Kragen-Vorderwand |
| 14 | Innen-Rückwand | 49 | Ausnehmung |
| 15 | Innen-Seitenwand | 50 | Haltestreifen |
| 16 | Innen-Stirnwand | 51 | Perforationslinie |
| 17 | Seitennaht | 52 | Verbindungsstück |
| 18 | Quernaht | 53 | Leimstreifen |
| 19 | Kuvertfaltung | 54 | Leimstreifen |
| 20 | Perforationslinie | 55 | Restverbindung |
| 21 | Öffnungslasche | 56 | Stanzlinie |
| 22 | Entnahmeöffnung | 57 | Steg |
| 23 | Verschlussetikett | 58 | Schwächungslinie |
| 24 | Frontschenkel | 59 | Zunge |
| 25 | Stirnabschnitt | 60 | Leimstreifen |
| 26 | Verankerungsschenkel | 61 | Schrägkante |
| 27 | Randstreifen | 62 | Kragen-Seitenlappen |
| 28 | Betätigungslasche | 63 | Schließkante |
| 29 | Schachtelteil | 64 | Lappenkante |
| 30 | Deckel | 65 | Kragenkante |
| 31 | Schachtel-Vorderwand | 66 | Packungskanten |
| 32 | Schachtel-Seitenwand | 67 | Schrägschenkel |
| 33 | Schachtel-Rückwand | 68 | Lappenschenkel |
| 34 | Deckel-Vorderwand | 69 | Rundkante |
| 35 | Deckel-Seitenwand | 70 | Rundschenkel |
| 36 | Deckel-Rückwand | 71 | Hauptstreifen |
| 37 | Deckel-Stirnwand | 72 | Faltlinie |
| 38 | Liniengelenk | 73 | Stegkante |
| 39 | Deckel-Innenlappen | 74 | Außenkante |
| 40 | Deckelkante | 75 | Seitenkante |
| 41 | Leimfeld | 76 | Fenster |
| 42 | Innenkragen | 77 | Versatz |
| 43 | Tray-Vorderwand | 78 | Leimpunkte |
| 44 | Ausnehmung | | |

## Patentansprüche

1. Packung, insbesondere für eine Zigarettengruppe (12), bestehend aus einer Innenpackung (11) aus Folie mit einer Entnahmeöffnung (22), die durch ein vorzugsweise mehrfach benutzbares Verschlussetikett (23) mit Griff- bzw. Betätigungslasche (28) verschlossen ist und mit einer Außenpackung (10) in der Ausführung als Hinge Lid Pack bzw. Klappdeckelpackung, bestehend aus Schachtelteil (29), Deckel (30) mit einem gegen die Innenseite einer Deckel-Vorderwand (34) gefalteten Deckel-Innenlappen (39) und mit einem vorzugsweise aus einem gesonderten Zuschnitt gebildeten Kragen (47) mit Kragen-Vorderwand (48) und Kragen-Seitenlappen (62), wobei die Kragen-Vorderwand (48) eine zum Deckel (30) bzw. zu einer Innen-Stirnwand (16) der Innenpackung (11) hin offene Ausnehmung (49) bildet, in deren Bereich das Verschlussetikett (23) mindestens mit einem an einer Innen-Vorderwand (13) der Innenpackung (11) anliegenden Schenkel, insbesondere einem Frontschenkel (24), angeordnet ist, **dadurch gekennzeichnet, dass** sich die Ausnehmung (49) über die volle Breite der Kragen-Vorderwand (48) erstreckt, derart, dass die Ausnehmung (49) seitlich durch die Kragen-Seitenlappen (62) begrenzt ist und durch die Ausnehmung (49) die volle freie Fläche der Innen-Vorderwand (13) oberhalb einer Schachtel-Vorderwand (31) freigehalten ist, sodass bei geöffnetem Deckel (30) lediglich die Kragen-Seitenlappen (62) im Bereich der Deckel-Seitenwände 35 sichtbar sind.

2. Packung nach Anspruch 1, **dadurch gekennzeichnet, dass** bei Ausbildung mit frontseitigen aufrechten Packungskanten als Schrägkanten (61) bzw. Oktagonalkanten oder als Rundkanten (69) an den Kragen-Seitenlappen (62) entsprechend den Schrägkanten (61) oder Rundkanten (69) bemessene Randstreifen, insbesondere Schrägschenkel (67) oder Rundschenkel (70) angeordnet sind zur Begrenzung der Ausnehmung (49) der Kragen-Vorderwand (48).

3. Packung nach Anspruch 1 oder 2, **dadurch gekennzeichnet, dass** eine dem Schachtelteil (29) der Hinge Lid Pack zugekehrte, quergerichtete Begrenzung der Ausnehmung (49) der Kragen-Vorderwand (48), nämlich eine Querkante (65), im Bereich einer eine Schachtel-Vorderwand (31) begrenzenden, dem Deckel (30) zugekehrten, quergerichteten Schließkante (63) verläuft oder unterhalb derselben, also verdeckt durch die Schachtel-Vorderwand (31).

## Claims

1. Pack, in particular for a cigarette group (12), comprising an inner pack (11) made of sheet material, which has a removal opening (22) which is closed off by a closure label (23), preferably usable multiple times, with a grip tab or actuating tab (28), and having an outer pack (10) in the form of a hinge-lid pack and comprising a box part (29), a lid (30), which has a lid inner flap (39) folded against the inner side of a lid front wall (34), and a collar (47), which is preferably formed from a separate blank and has a collar front wall (48) and collar side flaps (62), wherein the collar front wall (48) forms a recess (49) which is open towards the lid (30) or towards an inner end wall (16) of the inner pack (11) and in the region of which is arranged the closure label (23) at least with a limb, in particular a front limb (24), that bears against an inner front wall (13) of the inner pack (11), **characterized in that** the recess (49) extends over the full width of the collar front wall (48) in such a way that the recess (49) is delimited laterally by the collar side flaps (62), and, as a result of the recess (49), the entire free surface of the inner front wall (13) above a box front wall (31) is kept free, so that, when the lid (30) is open, it is possible to see only the collar side flaps (62) in the region of the lid side walls (35).

2. Pack according to Claim 1, **characterized in that**, in a configuration with front-side, upright pack edges as bevelled edges (61) or octagon edges, or as rounded edges (69), there are arranged on the collar side flaps (62) edge strips, in particular bevelled limbs (67) or rounded limbs (70), which are dimensioned in a manner corresponding to the bevelled edges (61) or rounded edges (69), for delimiting the recess (49) of the collar front wall (48).

3. Pack according to Claim 1 or 2, **characterized in that** a transversely directed delimitation, facing towards the box part (29) of the hinge-lid pack, of the recess (49) of the collar front wall (48), specifically a transverse edge (65), extends in the region of a transversely directed closure edge (63), which delimits a box front wall (31) and faces towards the lid (30), or below said closure edge, that is to say concealed by the box front wall (31).

## Revendications

1. Emballage, notamment pour un groupe de cigarettes (12), constitué d'un emballage intérieur (11) en feuille avec une ouverture de prélèvement (22) qui est fermée par une étiquette de fermeture (23) utilisable de préférence plusieurs fois avec une languette de préhension ou de manipulation (28) et avec un emballage extérieur (10) réalisé sous forme de « Hinge Lid Pack » ou d'emballage à couvercle rabattable, constitué d'une partie boîte (29), d'un couvercle (30) avec une patte intérieure de couvercle (39) pliée contre le côté intérieur d'une paroi avant de couvercle (34) et avec un col (47) formé de préférence à partir d'un flan séparé, avec une paroi avant de col (48) et des pattes latérales de col (62), la paroi avant de col (48) formant un évidement (49) ouvert vers le couvercle (30) ou vers une paroi frontale intérieure (16) de l'emballage intérieur (11), dans la zone duquel l'étiquette de fermeture (23) est agencée au moins avec une branche, notamment une branche frontale (24), s'appliquant contre une paroi avant intérieure (13) de l'emballage intérieur (11), **caractérisé en ce que** l'évidement (49) s'étend sur la largeur totale de la paroi avant de col (48), de telle sorte que l'évidement (49) est délimité latéralement par les pattes latérales de col (62) et, grâce à l'évidement (49), la surface libre totale de la paroi avant intérieure (13) est maintenue libre au-dessus d'une paroi avant de boîte (31), de telle sorte que, lorsque le couvercle (30) est ouvert, seules les pattes latérales de col (62) sont visibles dans la zone des parois latérales de couvercle.

2. Emballage selon la revendication 1, **caractérisé en ce que,** dans le cas d'une configuration avec des arêtes d'emballage verticales frontales sous forme d'arêtes obliques (61) ou d'arêtes octogonales ou sous forme d'arêtes rondes (69), des bandes de bordure, notamment des branches obliques (67) ou des branches rondes (70), dimensionnées en fonction des arêtes obliques (61) ou des arêtes rondes (69) sont agencées sur les pattes latérales de col (62) pour délimiter l'évidement (49) de la paroi avant de col (48).

3. Emballage selon la revendication 1 ou 2, **caractérisé en ce qu'une** délimitation transversale de l'évidement (49) de la paroi avant de col (48), à savoir une arête transversale (65), orientée vers la partie de boîte (29) du « Hinge Lid Pack », s'étend dans la zone d'une arête de fermeture (63) transversale, orientée vers le couvercle (30), délimitant une paroi avant de boîte (31), ou en dessous de celle-ci, c'est-à-dire cachée par la paroi avant de boîte (31).
